# EUROPÄISCHE PATENTSCHRIFT

(11) **EP 3 370 041 B1**
(45) Veröffentlichungstag und Bekanntmachung des Hinweises auf die Patenterteilung: **31.03.2021**
(21) Anmeldenummer: 18157782.6
(22) Anmeldetag: 21.02.2018
(51) Int. Cl.: G01G 3/14, G01G 21/24, G01G 23/01

(54) **WÄGEZELLE FÜR EINE WAAGE**
WEIGHING CELL FOR A WEIGHING DEVICE
CELLULE DE PESAGE POUR UNE BALANCE

(30) Priorität: 02.03.2017 DE 102017104367
(43) Veröffentlichungstag der Anmeldung: 05.09.2018
(73) Patentinhaber: Bizerba SE & Co. KG, 72336 Balingen (DE)
(72) Erfinder: Fiehn, Jürgen, 72351 Geislingen (DE); Schreiber, Annika, 72336 Balingen (DE); Eger, Thomas, 72393 Burladingen (DE)
(74) Vertreter: Manitz Finsterwald Patent- und Rechtsanwaltspartnerschaft mbB

(56) Entgegenhaltungen:
- EP-A1- 0 670 479
- EP-A1- 2 416 130
- JP-B2- 2 855 054
- US-A- 5 086 879

## Beschreibung

Die vorliegende Erfindung betrifft eine Wägezelle für eine Waage mit einem monolithisch ausgebildeten Messkörper, der einen Kraftaufnahmeabschnitt, einen Krafteinleitungsabschnitt und einen zwischen dem Kraftaufnahmeabschnitt und dem Krafteinleitungsabschnitt angeordneten Gelenkabschnitt aufweist, mit zumindest einem oberseitig auf dem Gelenkabschnitt angeordneten Dehnungsmessstreifen zur Erfassung einer dehnenden Verformung des Messkörpers, und mit einer kraftaufnahmeseitig und zumindest teilweise auf einer Leiterplatte angeordneten Elektronik mit einem Speicher, in dem Kalibrierungsdaten der Wägezelle und/oder ein Wert für die Erdbeschleunigung gespeichert sind, wobei eine Hardware-Schnittstelle vorgesehen ist, über die auf den Speicher zugreifbar ist und über die die in dem Speicher gespeicherten Kalibrierungsdaten und/oder der Wert für die Erdbeschleunigung änderbar sind. Insbesondere weist der Messkörper eine Längsachse und ein kraftaufnahmeseitiges axiales Ende und ein krafteinleitungsseitiges axiales Ende auf. Insbesondere weist die Elektronik einen Analog-Digital-Wandler zur Verarbeitung wenigstens eines Ausgangssignals des zumindest eines Dehnungsmessstreifens auf. Insbesondere ist die Elektronik mit dem zumindest einen Dehnungsmessstreifen elektrisch verbunden und/oder ist die Hardware-Schnittstelle mit der Elektronik elektrisch verbunden.

Wägezellen werden vor ihrer Auslieferung im Werk erstkalibriert. Hierzu werden z.B. mittels Kalibriergewichten Messwertabweichungen der Wägezelle von dem bekannten Gewicht der Kalibriergewichte ermittelt, und anschließend wird die Elektronik der Wägezelle, insbesondere ein Messverstärker der Wägezelle, derart eingestellt bzw. abgeglichen, dass das bekannte Gewicht der Kalibriergewichte korrekt auf einer Anzeige der Waage angezeigt wird. Hierbei werden entsprechende Kalibrierungsdaten in einem Speicher der Wägezelle hinterlegt. Da das von einer Waage bestimmte Gewicht und die Kalibrierungsdaten von dem Aufstellungsort der Waage, nämlich der Höhe über dem Meeresspiegel und dem Breitengrad abhängen, kann auch der Wert der an dem Aufstellungsort der Waage herrschenden Erdbeschleunigung in dem Speicher hinterlegt werden.

Eichpflichtige Waagen bzw. eichpflichtige Wägezellen müssen geeichet werden, d.h. einer speziellen, vom Gesetzgeber vorgeschriebenen Prüfung auf die Einhaltung zugrundeliegender eichrechtlicher Vorschriften, insbesondere Eichfehlergrenzen, unterzogen werden. Mit einer Eichmarke wird gekennzeichnet, dass eine Eichung durchgeführt wurde. Die Kalibrierungsdaten und/oder der Wert für die Erdbeschleunigung dürfen dann nicht mehr geändert werden. Hierzu wird die Eichmarke derart angebracht, dass sie zwangsläufig zerstört werden muss, wenn auf den Speicher zugegriffen werden soll, wodurch die Waage bzw. die Wägezelle ihre Eichung verliert, d.h. enteicht wird.

Allerdings ist es empfehlenswert, die Waage regelmäßig zu rekalibrieren, um zeitliche Drifts bzw. Langzeiteinflüsse auszugleichen, wozu auf den Speicher zugegriffen werden muss, um entsprechend geänderte Kalibrierungsdaten zu speichern. Ferner kann es erforderlich sein, auf den Speicher zuzugreifen, um den Wert für die Erdbeschleunigung zu ändern, wenn die Waage an einem anderen als dem bisherigen Ort aufgestellt wird. Eine Rekalibrierung ist dabei in der Regel nicht erforderlich, da die Kalibrierungsdaten für verschiedene Erdbeschleunigungen ineinander umgerechnet werden können. Derartige Änderungen der in dem Speicher hinterlegten Daten können von hierzu zugelassenen Personen, insbesondere staatlich zugelassenen Instandsetzern, wie z.B. Service-Techniker des Herstellers, vorgenommen werden, die die Waage bzw. die Wägezelle anschließend mit einem Instandsetzerkennzeichen versehen, so dass die Gültigkeit der Eichung weiterhin bestehen bleibt.

Aus dem Stand der Technik ist es bekannt, für den Zugriff auf den Speicher eine auf einer der Leiterplatte angeordnete Hardware-Schnittstelle, über die auf den Speicher zugegriffen werden kann, vorzusehen. Ferner ist ein Metallbügel vorgesehen, der mit einem Ende mittels einer Befestigungsschraube an dem Gehäuse der Waage befestigt ist und sich mit seinem freien Ende zu der Wägezelle erstreckt, um zumindest die Hardware-Schnittstelle der Leiterplatte von außen unzugänglich abzudecken. Die Befestigungsschraube ist dabei durch eine Eichmarke gesichert.

Eine derartige Abdeckung für die dem Speicher zugeordnete Hardware-Schnittstelle ist jedoch vergleichsweise massiv und sperrig.

Eine Wägezelle mit den Merkmalen des Oberbegriffs des Anspruchs 1 ist aus dem Dokument EP 0 670 479 A1 bekannt.

Der Erfindung liegt die Aufgabe zugrunde, eine handlichere Möglichkeit anzugeben, den Speicher der Wägezelle der eingangs genannten Art vor einer unzulässi gen Manipulation zu schützen, wobei zulässige Änderungen auch weiterhin möglich sein sollen.

Diese Aufgabe wird durch eine Wägezelle mit den Merkmalen des Anspruchs 1 gelöst, und insbesondere dadurch, dass ein elektronischer Schreibschutz für den Speicher vorgesehen ist, wobei die Elektronik eine, insbesondere auf der Leiterplatte angeordnete, Schalteinrichtung umfasst, um den Schreibschutz des Speichers zu deaktivieren, und wobei eine abnehmbare Abdeckung, insbesondere Eichabdeckung und/oder Abdeckplatte, vorgesehen ist, die mittels eines durch eine Eichmarke gesicherten Befestigungselements, insbesondere einer Befestigungsschraube, insbesondere oberseitig, an dem Kraftaufnahmeabschnitt des Messkörpers befestigt ist und die Schalteinrichtung von außen unzugänglich abdeckt.

Somit ist eine Abdeckung für die dem Speicher zugeordnete, insbesondere auf der Leiterplatte angeordnete, Hardware-Schnittstelle überhaupt nicht erforderlich, um den Speicher vor einer unzulässigen Manipulation zu schützen. Vielmehr kann die Hardware-Schnittstelle von außerhalb der Wägezelle frei zugänglich sein. Erfindungsgemäß erfolgt der Schutz des Speichers vor einer unzulässigen Manipulation dadurch, dass der Speicher elektronisch schreibgeschützt ist und der Schreibschutz, insbesondere nur, durch eine Schalteinrichtung aufhebbar ist, die durch eine durch eine Eichmarke gesicherte Abdeckung von außen unzugänglich abgedeckt ist. Darüber hinaus ist die Abdeckung nicht an dem Gehäuse der Waage befestigt, sondern an der Wägezelle selbst. Insbesondere können auch weiterhin Änderungen an den in dem Speicher hinterlegten, insbesondere eichrelevanten Daten, die auch über die vorstehend genannten Daten in Form der Kalibrierungsdaten und/oder des Wert für die Erdbeschleunigung hinausgehende Daten umfassen können, durch Deaktivieren des Schreibschutzes durch eine hierfür zugelassene Person vorgenommen werden.

Bevorzugt handelt es sich bei der Schalteinrichtung um einen Sensor. Durch einen Sensor kann der Schreibschutz automatisch deaktiviert werden.

Vorzugsweise ist der Sensor dazu ausgebildet, ein Entfernen des Befestigungselements aus seiner befestigten Stellung, insbesondere ein Herausschrauben der Befestigungsschraube, zu erfassen und, insbesondere nur, nach Erfassen eines Entfernens des Befestigungselements ein Schaltsignal auszugeben, um den Schreibschutz des Speichers zu deaktivieren. Solange sich das Befestigungsmittel in seiner befestigten Stellung befindet, ist der Speicher mit den Kalibrierungsdaten und/oder dem Wert für die Erdbeschleunigung schreibgeschützt.

Nach einer bevorzugten Ausführungsform der Erfindung ist der Sensor eine Lichtschranke mit einem Sender und einem Empfänger, die derart angeordnet ist, dass der Strahlengang und/oder der Lichtstrahl zwischen dem Sender und dem Empfänger unterbrochen ist, wenn sich das Befestigungselement, insbesondere die Befestigungsschraube für die Abdeckung, in seiner befestigten Stellung befindet, und die dazu ausgebildet ist, ein Schaltsignal auszugeben, um den Schreibschutz des Speichers zu deaktivieren, wenn der Strahlengang zwischen dem Sender und dem Empfänger nicht mehr durch das Befestigungselement unterbrochen ist. Wird das Befestigungselement entfernt und entsprechend ein Schaltsignal ausgegeben, kann in der Waage, insbesondere der Wägezelle, insbesondere dem genannten Speicher, gespeichert werden, dass die Waage bzw. die Wägezelle enteicht wurde. Die Waage bzw. die Wägezelle ist dann nicht mehr geeichet, selbst wenn das Befestigungselement später wieder in seine befestigte Stellung zurückverbracht wird, so dass die Lichtschranke wieder unterbrochen ist. Ein derartiger Sensor besitzt auch den Vorteil, dass ein unter Umständen auch manipulativ herbeigeführter Sensordefekt, bei dem kein Licht mehr durch den Sender ausgestrahlt wird, nicht zu einem versehentlichen Freigeben des Schreibschutzes führt.

Insbesondere kann eine Blende vorgesehen sein, hinter der die Lichtschranke angeordnet ist, um von außen einfallendes Licht von der Lichtschranke fernzuhalten. Hierdurch kann verhindert werden, dass ein Schaltsignal der Lichtschranke durch manipulatives Einstrahlen von Licht auf den Empfänger der Lichtschranke ausgelöst wird, obwohl sich das Befestigungselement, insbesondere die Befestigungsschraube für die Abdeckung, weiterhin in seiner befestigten Stellung befindet.

Alternativ kann die Schalteinrichtung auch ein manuell betätigbarer Schalter bzw. ein manuell betätigtes elektrisches Bauelement sein. Ist der Schalter auf der Unterseite der Leiterplatte montiert, wobei die Abdeckung die Leiterplatte von oben abdeckt, muss der Schalter durch eine Öffnung in der Leiterplatte bedient werden. Beispielsweise werden das Befestigungselement und die Abdeckung entfernt, und anschließend wird mittels eines Schraubenziehers durch die Öffnung in der Leiterplatte hindurch der Schalter betätigt. Es kann in diesem Zusammenhang vorgesehen sein, dass die Eichabdeckung im Bereich des Befestigungselements mit einer Klappe versehen ist, die nur geöffnet werden kann, wenn das Befestigungselement entfernt ist, so dass der Schalter besser zugänglich ist.

Die Abdeckung kann aus Kunststoff gefertigt sein. Die Abdeckung kann als eine Abdeckplatte ausgebildet sein. Die Eichmarke kann, insbesondere in Europa, ein Aufkleber oder, insbesondere in den USA, eine Eichplombe sein.

Vorzugsweise ist die Befestigungsschraube in ein, insbesondere oberseitig, in dem Kraftaufnahmeabschnitt ausgebildetes Loch mit Innengewinde, insbesondere ein Sackloch, eingeschraubt, wobei sich die Befestigungsschraube durch ein in der Abdeckung vorgesehenes Durchgangsloch und ein korrespondierendes, in der Leiterplatte vorgesehenes Durchgangsloch und gegebenenfalls ein korrespondierendes, in einer Schutzabdeckung vorgesehenes Durchgangsloch hindurch erstreckt. Insbesondere kann das Loch in einer, insbesondere oberseitig, in dem Kraftaufnahmeabschnitt vorgesehenen Vertiefung ausgebildet sein.

Der Kraftaufnahmeabschnitt kann oberseitig eine, insbesondere dreiseitig begrenzte, Vertiefung aufweisen, die, insbesondere ausschließlich, zu einem kraftaufnahmeseitigen Ende des Messkörpers hin offen ist, in die die Leiterplatte horizontal eingesetzt ist und die durch die Abdeckung von oben abdeckt ist. Aufgrund der Anordnung der Leiterplatte auf der Oberseite des Kraftaufnahmeabschnitts kann die Höhe des Messkörpers und damit die Bauhöhe der Wägezelle unabhängig von den Abmessungen der Leiterplatte gewählt werden. Der Umstand, dass die Leiterplatte in eine Vertiefung eingesetzt ist, trägt zusätzlich dazu bei, dass die Bauhöhe der Wägezelle klein gehalten werden kann. Dies gilt insbesondere dann, wenn die Leiterplatte in der Vertiefung vollständig versenkt angeordnet ist.

Vorzugsweise ist die Hardware-Schnittstelle auf der einem kraftaufnahmeseitigen Ende des Messkörpers zugewandten Seite der Leiterplatte angeordnet und/oder von außerhalb der Wägezelle frei zugänglich, wobei bevorzugt die Hardware-Schnittstelle über das kraftaufnahmeseitige Ende des Messkörpers nach außen hervorsteht und/oder als Teil einer Steckverbindung ausgebildet ist, dessen Steckrichtung horizontal, insbesondere entlang einer Längsachse des Messkörpers verläuft. Durch das Vorstehen der Hardware-Schnittstelle über das kraftaufnahmeseitige Ende des Messkörpers kann die Hardware-Schnittstelle einfach kontaktiert werden. Dies gilt insbesondere dann, wenn es sich bei der jeweiligen Steckverbindung um eine einrastende Steckverbindung handelt, die das Drücken einer Lasche erfordert, um die Steckverbindung wieder zu lösen. Neben der dem Speicher zugeordneten Hardware-Schnittstelle, die beispielsweise als USB-Schnittstelle ausgebildet sein kann, kann eine weitere Hardware-Schnittstelle vorgesehen sein, beispielsweise eine USB-Schnittstelle, die dazu ausgebildet ist, die Leiterplatte mit einem CPU-Board der Waage zu verbinden, welches dazu ausgebildet ist,, die von der Elektronik bereitgestellten Signale, insbesondere Gewichtswertsignale, zu verarbeiten.

Es kann eine Schutzabdeckung für die Leiterplatte, insbesondere für eine bestückte Seite der Leiterplatte, vorgesehen sein, wobei die Leiterplatte mit der Schutzabdeckung zu einem Modul zusammengesetzt ist, das, insbesondere mit der bestückten Seite der Leiterplatte und/oder der Schutzabdeckung nach unten, in die Vertiefung eingesetzt ist. Durch die Schutzabdeckung kann die auf der Leiterplatte angeordnete Elektronik, insbesondere der Speicher und/oder ein Analog-Digital-Wandler, gut vor Beschädigung geschützt werden.

Bevorzugt ist es, wenn die Schutzabdeckung wenigstens einen in Richtung der Leiterplatte über diese hinaus abstehenden Fixierzapfen und die Abdeckung wenigstens ein Fixierloch zur Aufnahme des jeweiligen von einer Schutzabdeckung abstehenden Fixierzapfens aufweist, wobei bevorzugt die Leiterplatte im Bereich des jeweiligen Fixierzapfens eine Aussparung aufweist. Hierdurch kann die Abdeckung relativ zu der Schutzabdeckung bzw. der Leiterplatte ausgerichtet werden.

Die Leiterplatte und die Schutzabdeckung können über eine insbesondere lösbare Clipverbindung mechanisch miteinander verbunden sein. Hierdurch kann eine einfache und insbesondere lösbare Verbindung geschaffen werden. Bevorzugt weist die Schutzabdeckung mehrere in Richtung der Leiterplatte, insbesondere über diese hinaus, abstehende Biegeschnapphaken auf, die die Leiterplatte im zusammengesetzten Zustand formschlüssig hintergreifen, um die Clipverbindung zu bilden.

Bevorzugt weist die Abdeckung Aufnahmelöcher zur Aufnahme der von der Schutzabdeckung abstehenden, über die Leiterplatte hinausstehenden Biegeschnapphaken auf. Der Umstand, dass sich die Biegeschnapphaken durch die Abdeckung hindurch erstrecken können, trägt dazu bei, dass die Bauhöhe der Wägezelle klein gehalten werden kann. Darüber hinaus kann hierdurch auch eine Ausrichtung der Abdeckung relativ zu der Schutzabdeckung erreicht werden.

Darüber hinaus kann die Abdeckung einen in Richtung der Leiterplatte abstehenden Stift aufweisen, der sich durch eine in der Leitplatte vorgesehene Durchgangsöffnung hindurch erstreckt und sich auf der Schutzabdeckung, insbesondere einem Gegenstift der Schutzabdeckung, abstützt, um die Abdeckung auf Abstand zu der Leiterplatte zu halten.

Nach einer bevorzugten Ausführungsform der Erfindung weist der Kraftaufnahmeabschnitt wenigstens ein Befestigungsloch für ein jeweiliges Befestigungsmittel, insbesondere eine jeweilige Schraube, zur Befestigung der Wägezelle an einer Waage auf, wobei die Abdeckung gleichzeitig auch das jeweilige Befestigungsloch und/oder das jeweilige Befestigungsmittel abdeckt, da auch das jeweilige Befestigungsloch und/oder das jeweilige Befestigungsmittel bei einer geeichten Waage grundsätzlich eichrelevant sind. Insbesondere kann der Kraftaufnahmeabschnitt mehrere Befestigungslöcher zur Befestigung der Wägezelle an einer Waage aufweisen, die bezüglich der Längsachse des Messkörpers beidseitig der Vertiefung und/oder beidseitig der Leiterplatte angeordnet sind.

Die vorliegende Erfindung betrifft ferner eine Waage mit einer Wägezelle, wie sie vorstehend beschrieben ist.

Weitere vorteilhafte Ausgestaltungen der Erfindung sind in den Ansprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: eine perspektivische Ansicht einer erfindungsgemäßen Wägezelle ohne eingesetzte Leiterplatte,
- Fig. 2: die Wägezelle aus Fig. 1 mit eingesetzter Leiterplatte,
- Fig. 3: die Leiterplatte aus Fig. 2 in einer Ansicht von unten,
- Fig. 4: eine perspektivische Ansicht einer Schutzabdeckung für die Leiterplatte, und
- Fig. 5: eine Draufsicht auf die Wägezelle gemäß den Fig. 1 und 2 mit einer Eichabdeckung.

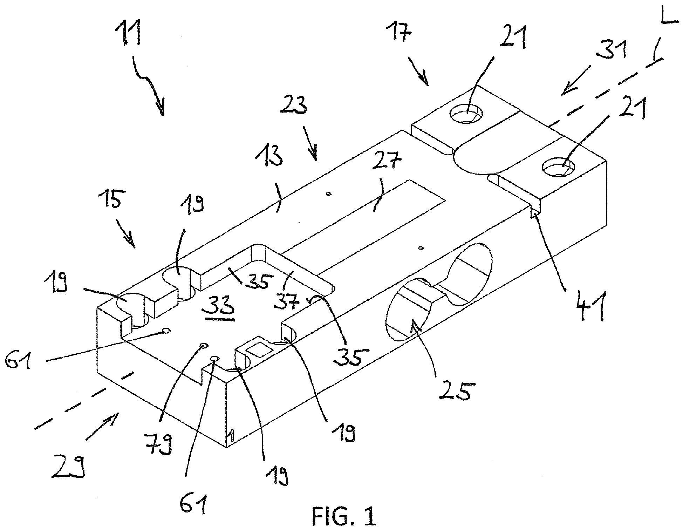

In Fig. 1 ist eine Wägezelle 11 für eine geeichte Waage gezeigt, die einen als Block monolithisch ausgebildeten Messkörper 13 umfasst, der einen Kraftaufnahmeabschnitt 15 und einen Krafteinleitungsabschnitt 17 aufweist. Der Kraftaufnahmeabschnitt 15 ist über vier Befestigungslöcher 19 an der Waage befestigbar, und an dem Krafteinleitungsabschnitt ist über zwei Befestigungslöcher 21 ein eine Lastplatte tragendes Lastkreuz befestigbar (nicht gezeigt). Zwischen den beiden Abschnitten 15, 17 ist ein Gelenkabschnitt 23 vorgesehen, so dass der Messkörper 13 als Biegestab bzw. Biegebalken wirkt. Hierzu ist in dem Gelenkabschnitt 23 ein zentraler, im Querschnitt insbesondere hundeknochenförmiger Durchgang 25 ausgebildet, der den Messkörper 13 vollständig durchdringt. Insgesamt weist der Messkörper 13 eine Längsachse L, ein kraftaufnahmeseitiges Ende 29 und ein krafteinleitungsseitiges Ende 31 auf. Zwischen dem Krafteinleitungsabschnitt 17 und dem Gelenkabschnitt 23 ist an der Oberseite des Messkörpers 13 eine senkrecht zur Längsachse L verlaufende Rille 41 vorgesehen, um eine mechanische Entkopplung des Krafteinleitungsabschnitts 17 zu erreichen.

Oberhalb des Durchgangs 25 sind an der Außenseite des Messkörpers 13 mehrere lediglich schematisch dargestellte Dehnungsmessstreifen (DMS) 27 angeordnet, die eine Verformung des Messkörpers 13 im Bereich des Gelenkabschnitts 23 in an sich bekannter Weise detektieren. Bei der Wägezelle 11 handelt es sich daher um eine DMS-Wägezelle. Eine Last auf dem Krafteinleitungsabschnitt 17 führt zu einer hierzu proportionalen Auslenkung bzw. Verbiegung des Messkörpers 13, so dass aus der Auslenkung bzw. einer Dehnung des Messkörpers 13 das Gewicht der Last ermittelt werden kann.

In dem Kraftaufnahmeabschnitt 15 ist an der Oberseite eine rechteckförmige Vertiefung 33 ausgebildet, die durch zwei sich in Richtung der Längsachse L des Messkörpers 13 erstreckende, bezüglich der Längsachse L gegenüberliegende Längsseitenwände 35 sowie durch eine dem krafteinleitungsseitigen Ende 31 zugewandte Stirnseitenwand 37 begrenzt ist. Zu dem kraftaufnahmeseitigen Ende 29 des Messkörpers 13 hin ist die Vertiefung 33 offen. Die Vertiefung 33 ist dabei bezüglich der Längsachse L mittig zwischen zwei Befestigungslöchern 19 zu ihrer einen Längsseite und zwei Befestigungslöchern 19 zu ihrer anderen Längsseite angeordnet.

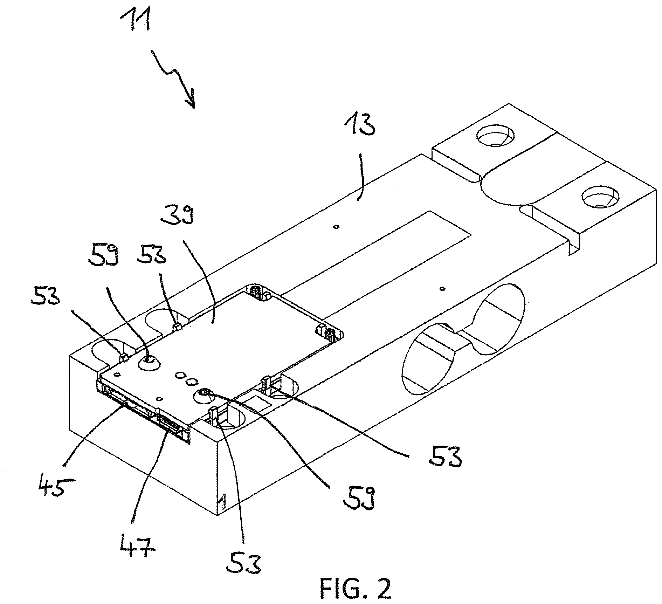

In die Vertiefung 33 ist eine Leiterplatte 39 horizontal eingesetzt, wie in Fig. 2 gezeigt ist. Die Leiterplatte 39 ist über nicht dargestellte Bonddrähte mit den Dehnungsmessstreifen 27 elektrisch verbunden und mit mehreren elektronischen Bauelementen einer Elektronik 43, die insbesondere einen Analog-Digital-Wandler 89 umfasst, bestückt. Die Elektronik 43 ist zur Signalverarbeitung zumindest eines Ausgangssignals der insbesondere eine Wheatstone'schen Messbrücke bildenden Dehnungsmessstreifen 27, insbesondere zur Berechnung eines Gewichtswerts, vorgesehen.

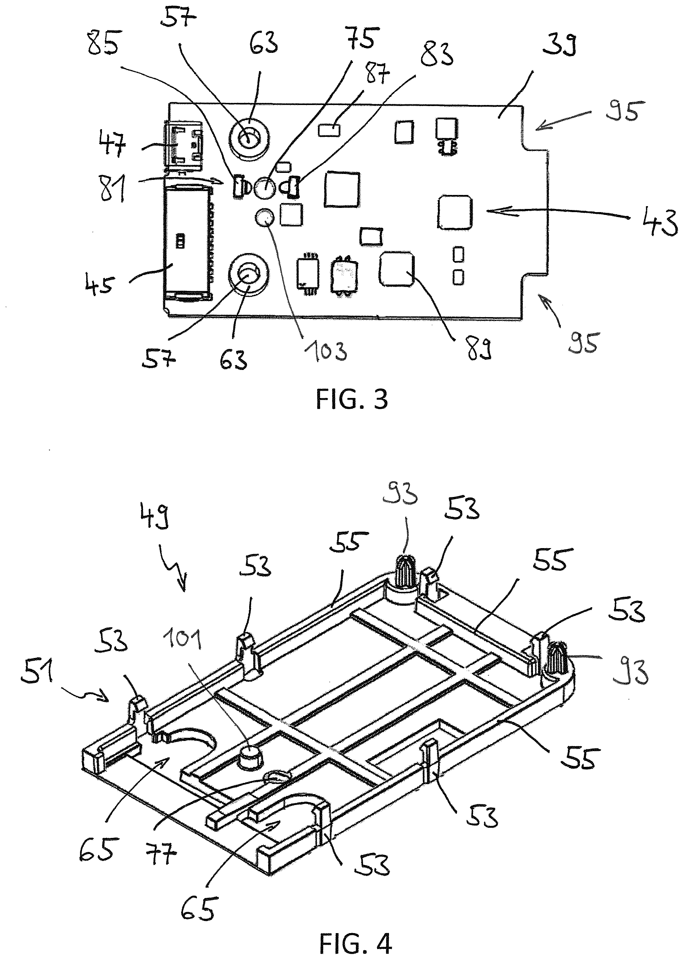

Die Leiterplatte 39 ist lediglich einseitig bestückt, so dass die Leiterplatte 39 eine Bestückungsseite, die in Fig. 3 gezeigt ist, und eine Lötseite aufweist. Die Leiterplatte 39 ist nach Art einer Überkopfmontage mit ihrer Bestückungsseite nach unten in der Vertiefung 33 eingesetzt, so dass ihre Lötseite nach oben weist, so dass die vorgenannte Bondverbindung zwischen der Leiterplatte 39, nämlich deren Lötseite, und den Dehnungsmessstreifen 27 besonders einfach herstellbar ist. Hierzu trägt auch bei, dass die Oberseite der Leiterplatte 39 in der Vertiefung zwar vollständig versenkt, aber nur knapp unterhalb der Oberseite des Gelenkabschnitts 23 angeordnet ist.

Durch die Anordnung der Leiterplatte 39 in der Vertiefung 33 auf der Oberseite des Messkörpers 13 kann eine Wägezelle 11 mit geringer Bauhöhe realisiert werden.

Die Leiterplatte 39 weist an ihrer dem kraftaufnahmeseitigen Ende 29 des Messkörpers 13 zugewandten Seite zwei mit der Elektronik 43 elektrisch verbundene Hardware-Schnittstellen 45, 47 auf, die jeweils als Buchse einer Steckverbindung ausgebildet sind und von außerhalb der Wägezelle 11 frei zugänglich sind, so dass die jeweiligen zugehörigen Stecker entlang der Längsachse L des Messkörpers 13 in die Buchsen 45, 47 eingesteckt oder aus diesen gelöst werden können. Bei der Hardware-Schnittstelle 45 handelt es sich um eine serielle Schnittstelle, über die während der Herstellung der Wägezelle 11 ein Abgleichen der Wägezelle 11 möglich ist. Insbesondere werden hierbei Kalibrierungsdaten der Wägezelle 11 in einem eichfähigen Speicher 87 der Elektronik 43 gespeichert, wobei anschließend ein elektronischer Schreibschutz aktiviert wird, um eine spätere unerlaubte Manipulation der Kalibrierungsdaten zu verhindern. Bei der Hardware-Schnittstelle 47 handelt es sich um eine USB-Schnittstelle, über die der von der Elektronik 43 berechnete Gewichtswert von einem nicht dargestellten, Wägezellen-externen CPU-Board ausgelesen bzw. an dieses ausgegeben werden kann.

Wie aus Fig. 2 ansatzweise zu erkennen ist, stehen die Leiterplatte 39 und die beiden Hardware-Schnittstellen 45, 47 über das kraftaufnahmeseitige Ende 29 des Messkörpers 13 nach außen hervor, um die Zugänglichkeit zu den Hardware-Schnittstellen 45, 47 weiter zu erleichtern.

Zum Schutz der Elektronik 43 ist eine Schutzabdeckung 49 vorgesehen, die in Fig. 4 gezeigt ist. Die Schutzabdeckung 49 ist mit der Leiterplatte 39 über eine lösbare mechanische Clipverbindung 51 zu einem Modul zusammengesetzt, wobei die Leiterplatte 39 gemeinsam mit der Schutzabdeckung 49 in die Vertiefung 33 eingesetzt ist, und zwar mit der Bestückungsseite der Leiterplatte 39 bzw. der Schutzabdeckung 49 voraus. Die Clipverbindung 51 wird dadurch gebildet, dass die Schutzabdeckung 49 mehrere in Richtung der Leiterplatte 39 abstehende Biegeschnapphaken 53 aufweist, die die Oberseite der Leiterplatte 39 formschlüssig hintergreifen. Die Leiterplatte 39 liegt dabei auf einem in Richtung der Leiterplatte 39 abstehenden Steg 55 der Schutzabdeckung 49 auf, der an den beiden Längsseiten und der dem krafteinleitungsseitigen Ende 31 zugewandte Stirnseite der Schutzabdeckung 49 ausgebildet ist.

An ihrer dem kraftaufnahmeseitigen Ende 29 des Messkörpers 13 zugewandten Stirnseite hingegen ist die Schutzabdeckung 49 stegfrei, da dort die beiden Hardware-Schnittstellen 45, 47 angeordnet sind, die von außen zugänglich sind, wie vorstehend erläutert ist.

Die Leiterplatte 39 weist zwei Durchgangslöcher 57 auf (Fig. 3), über die die Leiterplatte 39 mittels zweier Befestigungsschrauben 59 (Fig. 2) in entsprechenden, in der Vertiefung 33 ausgebildeten, jeweils ein Innengewinde aufweisenden Sacklöchern 61 (Fig. 1) befestigt ist. Die Befestigungsschrauben 59 erstrecken sich dabei jeweils durch das Innere einer jeweiligen Abstandshülse 63, die jeweils von der Unterseite der Leiterplatte 39 nach unten absteht, durch eine entsprechende, jeweilige Aussparung 65 in der Schutzabdeckung 49 hindurchgreift und auf dem Boden der Vertiefung 33 aufsetzt.

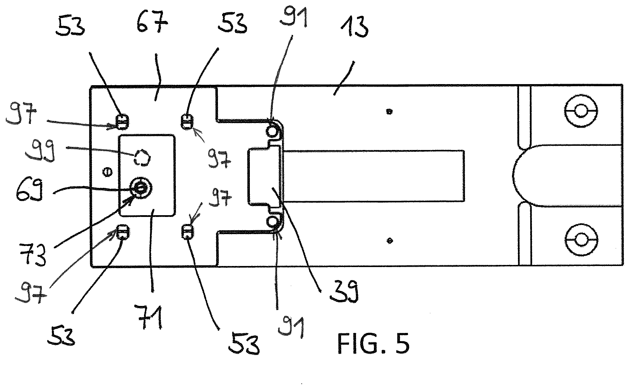

Darüber hinaus ist eine mittels einer Befestigungsschraube 69 an der Wägezelle 11 befestigte Eichabdeckung 67 vorgesehen (Fig. 5), die zumindest teilweise die Vertiefung 33 und damit die Leiterplatte 39 und die zwei Befestigungsschrauben 59 von oben und damit von außen unzugänglich abdeckt.

Die Befestigungsschraube 69 ist in einem in der Vertiefung 33 ausgebildeten Sackloch 79 mit Innengewinde eingeschraubt. Hierzu erstreckt sich die Befestigungsschraube 69 durch ein in der Eichabdeckung 67 ausgebildetes, in Fig. 5 durch die Befestigungsschraube 69 verdecktes Durchgangsloch 73, ein in der Leiterplatte 39 ausgebildetes Durchgangsloch 75 und ein in der Schutzabdeckung 49 ausgebildetes Durchgangsloch 77 hindurch, wobei die drei Durchgangslöcher 73, 75, 77 in Richtung senkrecht zur Oberfläche des Messkörpers 13 miteinander fluchtend angeordnet sind.

Die Anwesenheit der Befestigungsschraube 69 kann von einer an der Unterseite der Leiterplatte 39 angebrachten, von der Eichabdeckung 67 von außen unzugänglich abgedeckten Lichtschranke 81 erkannt werden. Hierzu sind der Sender 83 und der Empfänger 85 der Lichtschranke 81 auf zwei aneinander gegenüberliegenden Seiten des in der Leiterplatte 39 ausgebildeten Durchgangslochs 75 angeordnet, so dass durch die eingeschraubte Befestigungsschraube 69 die Lichtschranke 81 unterbrochen wird. Die Lichtschranke 81 ist derart ausgebildet, dass ein Schaltsignal erzeugt wird, wenn die Lichtschranke 81 nicht mehr durch das Befestigungselement 69 unterbrochen ist, d.h. wenn die Befestigungsschraube 69 herausgeschraubt wird.

Das Schaltsignal der Lichtschranke 81 wird dafür verwendet, den vorstehend erläuterten elektronischen Schreibschutz des Speichers 87 mit den Kalibrierungsdaten der Wägezelle aufzuheben, wie es für eine zulässige Rekalibrierung der Wägezelle 11 erforderlich ist.

Da die Eichabdeckung 67 mit einer Eichmarke 71 in Form eines transparent dargestellten Aufklebers versehen ist, der auf die Befestigungsschraube 69 für die Eichabdeckung 67 aufgeklebt ist, kann durch optische Prüfung festgestellt werden, wenn die Befestigungsschraube 69 für die Eichabdeckung 67 entfernt wird, da die Eichmarke 71 dann zwangsläufig zerstört wird. Wird die Befestigungsschraube 69 durch eine zugelassene Person entfernt, bleibt die Gültigkeit der Eichung jedoch weiterhin bestehen, was insbesondere dadurch kenntlich gemacht wird, dass die Wägezelle 11 mit einem Instandsetzerkennzeichen versehen wird.

Wie aus Fig. 5 weiter erkennbar ist, wird durch die Eichabdeckung 67 nicht nur die Vertiefung 33 abgedeckt, sondern es werden zusätzlich auch die Befestigungslöcher 19, über die die Wägezelle 11 mittels Schrauben an einem feststehenden Teil einer Waage befestigbar ist, sowie die genannten Schrauben, abgedeckt, so dass auch erkennbar ist, wenn auf diese Befestigung zugegriffen wurde.

Darüber hinaus sind in der Eichabdeckung 67 zwei Fixierlöcher 91 und vier Aufnahmelöcher 97 ausgebildet. In die Fixierlöcher 91 greift ein jeweiliger Fixierzapfen 93 für die Eichabdeckung 67 ein, der jeweils über die Leiterplatte 39 hinaus in Richtung der Eichabdeckung 67 von der Schutzabdeckung 49 absteht, wobei der Übersichtlichkeit halber in Fig. 5 die Fixierzapfen 93 nicht dargestellt sind. Die Leiterplatte 39 weist in dem jeweiligen Bereich eine Aussparung 95 auf. In die vier Aufnahmelöchern 97 greifen vier der von der Schutzabdeckung 49 abstehenden und über die Leiterplatte 39 hinausstehenden Biegeschnapphaken 53 ein.

Schließlich ist eine Ausrichteinrichtung vorgesehen, um die Schutzabdeckung 49 relativ zu der Eichabdeckung 67 auszurichten. Hierzu ist an der Unterseite der Eichabdeckung 67 ein in Richtung der Schutzabdeckung 49 abstehender Stift 99 der vorgesehen, der in Fig. 5 an sich nicht sichtbar und daher in Strichdarstellung gezeigt ist. Der Stift 99 erstreckt sich durch eine in der Leiterplatte 39 ausgebildete Durchgangsöffnung 103 hindurch und wirkt mit einem an der Schutzabdeckung 49 vorgesehenen Gegenstift 101 zusammen, um zu verhindern, dass beim Festschrauben der Befestigungsschraube 69 die Eichabdeckung 67 auf die Leiterplatte 39 gedrückt wird.

### Bezugszeichenliste

- 11: Wägezelle
- 13: Messkörper
- 15: Kraftaufnahmeabschnitt
- 17: Krafteinleitungsabschnitt
- 19: Befestigungsloch
- 21: Befestigungsloch
- 23: Gelenkabschnitt
- 25: Durchgang
- 27: Dehnungsmessstreifen
- 29: Ende
- 31: Ende
- 33: Vertiefung
- 35: Längsseitenwand
- 37: Stirnseitenwand
- 39: Leiterplatte
- 41: Rille
- 43: Elektronik
- 45: Hardware-Schnittstelle
- 47: Hardware-Schnittstelle
- 49: Schutzabdeckung
- 51: Clipverbindung
- 53: Biegeschnapphaken
- 55: Steg
- 57: Durchgangsloch
- 59: Befestigungsschraube
- 61: Sackloch
- 63: Abstandhülse
- 65: Aussparung
- 67: Eichabdeckung
- 69: Befestigungsschraube
- 71: Eichmarke
- 73: Durchgangsloch
- 75: Durchgangsloch
- 77: Durchgangsloch
- 79: Sackloch
- 81: Lichtschranke
- 83: Sender
- 85: Empfänger
- 87: Speicher
- 89: Analog-Digital-Wandler
- 91: Fixierloch
- 93: Fixierzapfen
- 95: Aussparung
- 97: Aufnahmeloch
- 99: Stift
- 101: Gegenstift
- 103: Durchgangsöffnung

- L: Längsachse

## Patentansprüche

1. Wägezelle für eine Waage
mit einem monolithisch ausgebildeten Messkörper (13), der einen Kraftaufnahmeabschnitt (15), einen Krafteinleitungsabschnitt (17) und einen zwischen dem Kraftaufnahmeabschnitt (15) und dem Krafteinleitungsabschnitt (17) angeordneten Gelenkabschnitt (23) aufweist,
mit zumindest einem oberseitig auf dem Gelenkabschnitt (23) angeordneten Dehnungsmessstreifen (27) zur Erfassung einer dehnenden Verformung des Messkörpers (13), und
mit einer kraftaufnahmeseitig und zumindest teilweise auf einer Leiterplatte (39) angeordneten Elektronik (43) mit einem Speicher (87), in dem Kalibrierungsdaten der Wägezelle (11) und/oder ein Wert für die Erdbeschleunigung gespeichert sind,
wobei eine Hardware-Schnittstelle (45) vorgesehen ist, über die auf den Speicher (87) zugreifbar ist und über die die in dem Speicher (87) gespeicherten Kalibrierungsdaten und/oder der Wert für die Erdbeschleunigung änderbar sind, und
wobei ein elektronischer Schreibschutz für den Speicher (87) vorgesehen ist, wobei die Elektronik (43) eine Schalteinrichtung (81) umfasst, um den Schreibschutz des Speichers (87) zu deaktivieren,
**dadurch gekennzeichnet,**
**dass** eine abnehmbare Abdeckung (67) vorgesehen ist, die mittels eines durch eine Eichmarke (71) gesicherten Befestigungselements (69), insbesondere einer Befestigungsschraube, an dem Kraftaufnahmeabschnitt (15) des Messkörpers (13) befestigt ist und die Schalteinrichtung (81) von außen unzugänglich abdeckt.

2. Wägezelle nach Anspruch 1,
**dadurch gekennzeichnet,**
**dass** es sich bei der Schalteinrichtung (81) um einen Sensor oder einen manuell betätigbaren Schalter handelt.

3. Wägezelle nach Anspruch 2,
**dadurch gekennzeichnet,**
**dass** der Sensor (81) dazu ausgebildet ist, ein Entfernen des Befestigungselements (69) aus seiner befestigten Stellung, insbesondere ein Herausschrauben der Befestigungsschraube, zu erfassen und nach Erfassen eines Entfernens des Befestigungselements (69) ein Schaltsignal auszugeben, um den Schreibschutz des Speichers (87) zu deaktivieren.

4. Wägezelle nach Anspruch 3,
**dadurch gekennzeichnet,**
**dass** der Sensor (81) eine Lichtschranke mit einem Sender (83) und einem Empfänger (85) ist, die derart angeordnet ist, dass der Strahlengang zwischen dem Sender (83) und dem Empfänger (85) unterbrochen ist, wenn sich das Befestigungselement (69) in seiner befestigten Stellung befindet, und die dazu ausgebildet ist, ein Schaltsignal auszugeben, um den Schreibschutz des Speichers (87) zu deaktivieren, wenn der Strahlengang zwischen dem Sender (83) und dem Empfänger (85) nicht mehr durch das Befestigungselement (69) unterbrochen ist.

5. Wägezelle nach Anspruch 4,
**dadurch gekennzeichnet,**
**dass** eine Blende vorgesehen ist, hinter der die Lichtschranke (81) angeordnet ist, um von außen einfallendes Licht von der Lichtschranke (81) fernzuhalten.

6. Wägezelle nach zumindest einem der vorstehenden Ansprüche,
**dadurch gekennzeichnet,**
**dass** die Befestigungsschraube (69) in ein in dem Kraftaufnahmeabschnitt (15) ausgebildetes Loch (79) mit Innengewinde, insbesondere ein Sackloch, eingeschraubt, wobei sich die Befestigungsschraube (69) durch ein in der Abdeckung (67) vorgesehenes Durchgangsloch (73) und ein korrespondierendes, in der Leiterplatte (39) vorgesehenes Durchgangsloch (75) und gegebenenfalls ein korrespondierendes, in einer Schutzabdeckung (49) vorgesehenes Durchgangsloch (77) hindurch erstreckt.

7. Wägezelle nach zumindest einem der vorstehenden Ansprüche,
**dadurch gekennzeichnet,**
**dass** der Kraftaufnahmeabschnitt (15) oberseitig eine Vertiefung (33) aufweist, die zu einem kraftaufnahmeseitigen Ende (29) des Messkörpers (13) hin offen ist, in die die Leiterplatte (39) horizontal eingesetzt ist und die durch die Abdeckung (67) von oben abdeckt ist, wobei bevorzugt die Leiterplatte (39) in der Vertiefung (33) vollständig versenkt angeordnet ist.

8. Wägezelle nach zumindest einem der vorstehenden Ansprüche,
**dadurch gekennzeichnet,**
**dass** die Hardware-Schnittstelle (45) auf der einem kraftaufnahmeseitigen Ende (29) des Messkörpers (13) zugewandten Seite der Leiterplatte (39) angeordnet ist und/oder von außerhalb der Wägezelle (11) frei zugänglich ist, wobei bevorzugt die Hardware-Schnittstelle (45) über das kraftaufnahmeseitige Ende (29) des Messkörpers (13) nach außen hervorsteht und/oder als Teil einer Steckverbindung ausgebildet ist, dessen Steckrichtung horizontal, insbesondere entlang einer Längsachse (L) des Messkörpers (13) verläuft.

9. Wägezelle nach zumindest einem der vorstehenden Ansprüche,
**dadurch gekennzeichnet,**
**dass** eine Schutzabdeckung (49) für die Leiterplatte (39), insbesondere für eine bestückte Seite der Leiterplatte (39), vorgesehen ist, wobei die Leiterplatte (39) mit der Schutzabdeckung (49) zu einem Modul zusammengesetzt ist, das, insbesondere mit der bestückten Seite der Leiterplatte (39) und/oder der Schutzabdeckung (49) nach unten, in die Vertiefung (33) eingesetzt ist.

10. Wägezelle nach Anspruch 9,
**dadurch gekennzeichnet,**
**dass** die Schutzabdeckung (49) wenigstens einen in Richtung der Leiterplatte (39) über diese hinaus abstehenden Fixierzapfen (93) und die Abdeckung (67) wenigstens ein Fixierloch (91) zur Aufnahme des jeweiligen von einer Schutzabdeckung (49) abstehenden Fixierzapfens (93) aufweist, wobei bevorzugt die Leiterplatte (39) im Bereich des jeweiligen Fixierzapfens (93) eine Aussparung (95) aufweist.

11. Wägezelle nach Anspruch 9 oder 10,
**dadurch gekennzeichnet,**
**dass** die Leiterplatte (39) und die Schutzabdeckung (49) über eine insbesondere lösbare Clipverbindung (51) mechanisch miteinander verbunden sind, wobei bevorzugt die Schutzabdeckung (49) mehrere in Richtung der Leiterplatte (39), insbesondere über diese hinaus, abstehende Biegeschnapphaken (53) aufweist, die die Leiterplatte (39) im zusammengesetzten Zustand formschlüssig hintergreifen, um die Clipverbindung (51) zu bilden.

12. Wägezelle nach Anspruch 11,
**dadurch gekennzeichnet,**
**dass** die Abdeckung (67) Aufnahmelöcher (97) zur Aufnahme zumindest einiger der von der Schutzabdeckung (49) abstehenden, über die Leiterplatte (39) hinausstehenden Biegeschnapphaken (53) aufweist.

13. Wägezelle nach zumindest einem der Ansprüche 9 bis 12,
**dadurch gekennzeichnet,**
**dass** die Abdeckung (67) einen in Richtung der Leiterplatte (39) abstehenden Stift (99) aufweist, der sich durch eine in der Leitplatte (39) vorgesehene Durchgangsöffnung (103) hindurch erstreckt und sich auf der Schutzabdeckung (49), insbesondere einem Gegenstift (101) der Schutzabdeckung (49), abstützt.

14. Wägezelle nach zumindest einem der vorstehenden Ansprüche,
**dadurch gekennzeichnet,**
**dass** der Kraftaufnahmeabschnitt (15) wenigstens ein Befestigungsloch (19) für ein jeweiliges Befestigungsmittel, insbesondere eine jeweilige Schraube, zur Befestigung der Wägezelle (11) an einer Waage aufweist, wobei die Abdeckung (67) gleichzeitig auch das jeweilige Befestigungsloch (19) und/oder das jeweilige Befestigungsmittel abdeckt.

15. Waage mit einer Wägezelle (11) nach einem der vorstehenden Ansprüche.

## Claims

1. A load cell for a scale
having a monolithically configured measurement body (13) which has a force reception section (15), a force introduction section (17) and a joint section (23) arranged between the force reception section (15) and the force introduction section (17);
having at least one strain gauge (27) arranged at the upper side on the joint section (23) for detecting a stretching deformation of the measurement body (13); and
having electronics (13) which are arranged at the force reception side and at least partly on a circuit board (39) and which have a memory (87) in which calibration data of the load cell (11) and/or a value for gravity are/is stored,
wherein a hardware interface (45) is provided via which the memory (87) can be accessed and via which the calibration data stored in the memory (87) and/or the value for gravity can be changed, and
wherein an electronic write protection for the memory (87) is provided, with the electronics (43) comprising a switching device (81) to deactivate the write protection of the memory (87),
**characterized in that**
a removable cover (67) is provided which is fastened to the force reception section (15) of the measurement body (13) by means of a fastening element (69), in particular a fastening screw, secured by a calibration mark (71) and which covers the switching device (81) in a manner inaccessible from the outside.

2. A load cell in accordance with claim 1,
**characterized in that**
the switching device (81) is a sensor or a manually actuable switch.

3. A load cell in accordance with claim 2,
**characterized in that**
the sensor (81) is configured to detect a removal of the fastening element (69) from its fastened position, in particular an unscrewing of the fastening screw, and to output a switching signal to deactivate the write protection of the memory (87) after detecting a removal of the fastening element (69).

4. A load cell in accordance with claim 3,
**characterized in that**
the sensor (81) is a light barrier which has a transmitter (83) and a receiver (85), which is arranged such that the optical path between the transmitter (83) and the receiver (85) is interrupted when the fastening element (69) is in its fastened position and which is configured to output a switching signal to deactivate the write protection of the memory (87) when the optical path between the transmitter (83) and the receiver (85) is no longer interrupted by the fastening element (69).

5. A load cell in accordance with claim 4,
**characterized in that**
a diaphragm is provided behind which the light barrier (81) is arranged to keep light incident from the outside away from the light barrier (81).

6. A load cell in accordance with at least one of the preceding claims,
**characterized in that**
the fastening screw (69) is screwed into a hole (79), in particular a blind hole, which is formed in the force reception section (15) and which has an internal thread, with the fastening screw (69) extending through a passage hole (73) provided in the cover (67) and through a corresponding passage hole (75) provided in the circuit board (39) and, optionally, through a corresponding passage hole (77) provided in a protective cover (49).

7. A load cell in accordance with at least one of the preceding claims,
**characterized in that**
the force reception section (15) has a recess (33) at the upper side which is open toward an end (29) of the measurement body (13) at the force reception side, into which the circuit board (39) is inserted horizontally and which is covered from above by the cover (67), with the circuit board (39) preferably being completely sunk into the recess (33).

8. A load cell in accordance with at least one of the preceding claims,
**characterized in that**
the hardware interface (45) is arranged at the side of the circuit board (39) facing an end (29) of the measurement body (13) at the force reception side and/or is freely accessible from outside the load cell (11), with the hardware interface (45) preferably projecting outwardly beyond the end (29) of the measurement body (15) at the force reception side and/or preferably being configured as part of a plug-in connection whose plug-in direction extends horizontally, in particular along a longitudinal axis (L) of the measurement body (13).

9. A load cell in accordance with at least one of the preceding claims,
**characterized in that**
a protective cover (49) is provided for the circuit board (39), in particular for a populated side of the circuit board (39), with the circuit board (39) being combined with the protective cover (49) to form a module which is inserted into the recess (33), in particular with the populated side of the circuit board (39) and/or of the protective cover (49) facing downwardly.

10. A load cell in accordance with claim 9,
**characterized in that**
the protective cover (49) has at least one fixing spigot (93) projecting in the direction of and beyond the circuit board (39) and the cover (67) has at least one fixing hole (91) for receiving the respective fixing spigot (93) projecting from a protective cover (49), with the circuit board (39) preferably having a cut-out (95) in the region of the respective fixing spigot (93).

11. A load cell in accordance with claim 9 or claim 10,
**characterized in that**
the circuit board (39) and the protective cover (49) are mechanically connected to one another via a clip connection (51) which is in particular releasable, with the protective cover (49) preferably having a plurality of bending snap-in hooks (53) which project in the direction of the circuit board (39), in particular beyond it, and which engage behind the circuit board (39) with shape matching in the assembled state in order to form the clip connection (51).

12. A load cell in accordance with claim 11,
**characterized in that**
the cover (67) has reception holes (97) for receiving at least some of the bending snap-in hooks (53) projecting from the protective cover (49) and protruding beyond the circuit board (39).

13. A load cell in accordance with at least one of the claims 9 to 12,
**characterized in that**
the cover (67) has at least one pin (99) which projects in the direction of the circuit board (39), which extends through a passage opening (103) provided in the circuit board (39) and which is supported on the protective cover (49), in particular on a counter-pin (101) of the protective cover (49).

14. A load cell in accordance with at least one of the preceding claims,
**characterized in that**
the force reception section (15) has at least one fastening hole (19) for a respective fastening means, in particular a respective screw, for fastening the load cell (11) to a scale, with the cover (67) simultaneously also covering the respective fastening hole (19) and/or the respective fastening means.

15. A scale having a load cell (11) in accordance with any one of the preceding claims.

## Revendications

1. Cellule de pesage pour une balance, comportant
un corps de mesure (13) de conception monolithique, qui présente une portion de réception de force (15), une portion d'introduction de force (17) et une portion d'articulation (23) disposée entre la portion de réception de force (15) et la portion d'introduction de force (17),
au moins une jauge de contrainte (27) disposée sur la face supérieure de la portion d'articulation (23) et destinée à détecter une déformation en extension du corps de mesure (13), et
une électronique (43) disposée du côté réception de force et au moins partiellement sur une carte à circuit imprimé (39), qui comprend une mémoire (87) dans laquelle sont stockées des données de calibrage de la cellule de pesage (11) et/ou une valeur pour l'accélération due à la gravité,
dans laquelle
il est prévu une interface matérielle (45) permettant d'accéder à la mémoire (87) et de modifier les données de calibrage stockées dans la mémoire (87) et/ou la valeur pour l'accélération due à la gravité, et
il est prévu une protection électronique en écriture pour la mémoire (87), l'électronique (43) comprenant un dispositif de commutation (81) pour désactiver la protection en écriture de la mémoire (87),
**caractérisée en ce que**
il est prévu un couvercle amovible (67) qui est fixé à la portion de réception de force (15) du corps de mesure (13) par l'intermédiaire d'un élément de fixation (69), en particulier d'une vis de fixation, sécurisé(e) par un marquage d'étalonnage (71), et qui recouvre le dispositif de commutation (81) de telle sorte qu'il est inaccessible de l'extérieur.

2. Cellule de pesage selon la revendication 1,
**caractérisée en ce que**
le dispositif de commutation (81) est un capteur ou un interrupteur à commande manuelle.

3. Cellule de pesage selon la revendication 2,
**caractérisée en ce que**
le capteur (81) est réalisé pour détecter un retrait de l'élément de fixation (69) de sa position fixée, en particulier un dévissage de la vis de fixation, et pour émettre un signal de commutation après avoir détecté un retrait de l'élément de fixation (69), afin de désactiver la protection en écriture de la mémoire (87).

4. Cellule de pesage selon la revendication 3,
**caractérisée en ce que**
le capteur (81) est une barrière lumineuse ayant un émetteur (83) et un récepteur (85), qui est disposée de telle sorte que le chemin optique entre l'émetteur (83) et le récepteur (85) est interrompu lorsque l'élément de fixation (69) est dans sa position fixée, et qui est réalisée pour émettre un signal de commutation, afin de désactiver la protection en écriture de la mémoire (87) lorsque le chemin optique entre l'émetteur (83) et le récepteur (85) n'est plus interrompu par l'élément de fixation (69).

5. Cellule de pesage selon la revendication 4,
**caractérisée en ce que**
il est prévu un cache derrière lequel la barrière lumineuse (81) est disposée pour maintenir la lumière incidente de l'extérieur à l'écart de la barrière lumineuse (81).

6. Cellule de pesage selon l'une au moins des revendications précédentes,
**caractérisée en ce que**
la vis de fixation (69) est vissée dans un trou (79) taraudé, en particulier un trou borgne, formé dans la portion de réception de force (15), la vis de fixation (69) s'étendant à travers un trou traversant (73) prévu dans le couvercle (67) et à travers un trou traversant correspondant (75) prévu dans la carte à circuit imprimé (39) et, le cas échéant, à travers un trou traversant correspondant (77) prévu dans un couvercle de protection (49).

7. Cellule de pesage selon l'une au moins des revendications précédentes,
**caractérisée en ce que**
la portion de réception de force (15) présente sur le côté supérieur un renfoncement (33) qui est ouvert vers une extrémité (29) côté réception de force du corps de mesure (13) et dans lequel la carte à circuit imprimé (39) est insérée horizontalement et qui est recouvert par le haut par le couvercle (67), la carte à circuit imprimé (39) étant disposée de préférence en étant complètement noyée dans le renfoncement (33).

8. Cellule de pesage selon l'une au moins des revendications précédentes,
**caractérisée en ce que**
l'interface matérielle (45) est disposée sur la face de la carte à circuit imprimé (39) tournée vers une extrémité (29) côté réception de force du corps de mesure (13) et/ou est librement accessible de l'extérieur de la cellule de pesage (11), l'interface matérielle (45) dépassant de préférence vers l'extérieur au-delà de l'extrémité (29) côté réception de force du corps de mesure (13) et/ou étant réalisée sous forme de partie d'une connexion enfichable dont la direction d'enfichage s'étend horizontalement, en particulier le long d'un axe longitudinal (L) du corps de mesure (13).

9. Cellule de pesage selon l'une au moins des revendications précédentes,
**caractérisée en ce que**
il est prévu un couvercle de protection (49) pour la carte à circuit imprimé (39), en particulier pour une face d'équipement de la carte à circuit imprimé (39), la carte à circuit imprimé (39) étant assemblée avec le couvercle de protection (49) pour former un module qui est inséré dans le renfoncement (33), en particulier avec la face d'équipement de la carte à circuit imprimé (39) et/ou avec le couvercle de protection (49) tourné(e) vers le bas.

10. Cellule de pesage selon la revendication 9,
**caractérisée en ce que**
le couvercle de protection (49) présente au moins un tenon de fixation (93) dépassant au-delà de la carte à circuit imprimé (39) en direction de celle-ci, et le couvercle (67) présente au moins un trou de fixation (91) pour recevoir le tenon de fixation (93) respectif dépassant d'un couvercle de protection (49), la carte à circuit imprimé (39) présentant de préférence une échancrure (95) au niveau du tenon de fixation (93) respectif.

11. Cellule de pesage selon la revendication 9 ou 10,
**caractérisée en ce que**
la carte à circuit imprimé (39) et le couvercle de protection (49) sont reliés mécaniquement l'un à l'autre par une liaison par clips (51), qui est en particulier détachable, le couvercle de protection (49) présentant de préférence plusieurs crochets d'encliquetage en flexion (53) qui dépassent en direction de la carte à circuit imprimé (39), en particulier au-delà de celle-ci, et qui, à l'état assemblé, engagent par l'arrière la carte à circuit imprimé (39) par coopération de forme pour former la liaison par clips (51).

12. Cellule de pesage selon la revendication 11,
**caractérisée en ce que**
le couvercle (67) présente des trous de réception (97) pour recevoir au moins quelques-uns des crochets d'encliquetage en flexion (53) faisant saillie du couvercle de protection (49) et dépassant au-delà de la carte à circuit imprimé (39).

13. Cellule de pesage selon l'une au moins des revendications 9 à 12,
**caractérisée en ce que**
le couvercle (67) présente une broche (99) qui fait saillie en direction de la carte à circuit imprimé (39), qui s'étend à travers une ouverture de passage (103) prévue dans la carte à circuit imprimé (39) et qui s'appuie sur le couvercle de protection (49), en particulier sur une contre-broche (101) du couvercle de protection (49).

14. Cellule de pesage selon l'une au moins des revendications précédentes,
**caractérisée en ce que**
la portion de réception de force (15) présente au moins un trou de fixation (19) pour un moyen de fixation respectif, en particulier pour une vis respective, pour fixer la cellule de pesage (11) à une balance, le couvercle (67) recouvrant simultanément également le trou de fixation (19) respectif et/ou le moyen de fixation respectif.

15. Balance comportant une cellule de pesage (11) selon l'une des revendications précédentes.
